# EUROPEAN PATENT SPECIFICATION

(11) **EP 0 421 948 B1**
(45) Date of publication and mention of the grant of the patent: **08.02.1995**
(21) Application number: 90830408.2
(22) Date of filing: 18.09.1990
(51) Int. Cl.: F16H 59/04

(54) **An operating linkage for the gearbox of a commercial vehicle with a safety system for preventing the gears from becoming disengaged**
Schaltgestänge für das Schaltgetriebe eines Industriefahrzeuges mit einer Sicherheitseinrichtung zur Vermeidung des Herausspringens eines eingelegten Ganges
Tige de vitesse pour la boîte de vitesse d'un véhicule industriel avec dispositif de sécurité pour prévenir le découplage de l'engrenage

(30) Priority: 25.09.1989 IT 5336389 U
(43) Date of publication of application: 10.04.1991
(73) Proprietor: IVECO FIAT S.p.A., 10156 Torino (IT)
(72) Inventor: Bruno, Marco, I-10050 Chiusa Di San Michele, Torino (IT)
(74) Representative: Marchitelli, Mauro

(56) References cited:
- EP-A- 0 139 473
- EP-A- 0 163 950
- EP-A- 0 376 902
- DE-A- 2 527 407
- DE-C- 3 519 749
- FR-A- 893 743
- US-A- 2 615 346
- US-A- 3 837 235

## Description

The present invention relates to an operating linkage for the gearboxes of commercial vehicles comprising the features as outlined in the preamble of claim 1. Such an operating linkage is known from DE-C 35 19 749.

Conventional linkages have a problem in that the gears slip out of engagement as a result of vibrations and jolting of the vehicle. In fact, if the considerable mass of the whole linkage system is taken into account, it is clear that the inertia of the masses which come into play as a result of excessive jolting and vibration of the power unit and the cab may accidentally cause the aforementioned disengagement.

Current solutions use springs which are interposed externally between the support structure and the transmission levers, or between the support structure and the connecting rods for the articulation of the joints between the transmission levers, and urge the parts of the linkage into the configuration in which a gear is engaged, increasing the force necessary for the driver to engage the opposite gear.

The object of the present invention is to further develop a generic linkage of the type specified at the beginning of the description which is simply and cheaply without increasing the loads applied to the gear lever by the user.

According to the invention, this object is achieved by the features as defined in claim 1.

The linkage preferably includes a push rod supported slidably by the connecting rod and parallel thereto, a cam element fixed to the support structure and having a profiled edge parallel to the plane of articulation of the connecting rod, the edge having a first portion whose average radial distance from the pivot axis of the connecting rod is greater than the average radial distance therefrom of two adjacent second portions of the edge connected to the first portion, and a spring interposed between the push rod and the connecting rod and adapted to urge the push rod against the edge of the cam element, the pivoting of the connecting rod compressing the spring when the push rod slides from one of the two second edge portions of the cam element towards the first portion.

By virtue of these characteristics, the safety system operates only during the stage of disengagement of the gears, whilst the loads on the gear lever remain unchanged during the engagement stage.

Further characteristics and advantages of the linkage according to the invention will become clear from the detailed description which follows with reference to the appended drawings, provided by way of non-limiting example, in which:
Figure 1 is a side view of a gearbox operating linkage according to the invention,
Figure 2 is a detail of Figure 1 on an enlarged scale,
Figure 3 is a section taken on the line III-III of Figure 2,
Figure 4 is a view similar to Figure 2 and shows a variant of the linkage, and
Figure 5 is a section taken on the line V-V of Figure 4.

With reference to the drawings, a linkage, generally indicated 10, for operating the gearbox C of a commercial vehicle comprises first and second transmission levers 11 and 12 interposed between the selector of the gearbox C and the manual gear lever, indicated L in the drawings, situated in the driver's cab of the vehicle. A linkage of this type, which includes a joint 13 between the levers 11 and 12 comprising a spherical support element rotatable within a tubular body which forms part of the cross member of the joint, is described and illustrated in European Patent Application EP-A-0 376 902 filed by the Applicant and to which reference is made (published on 04/07/90).

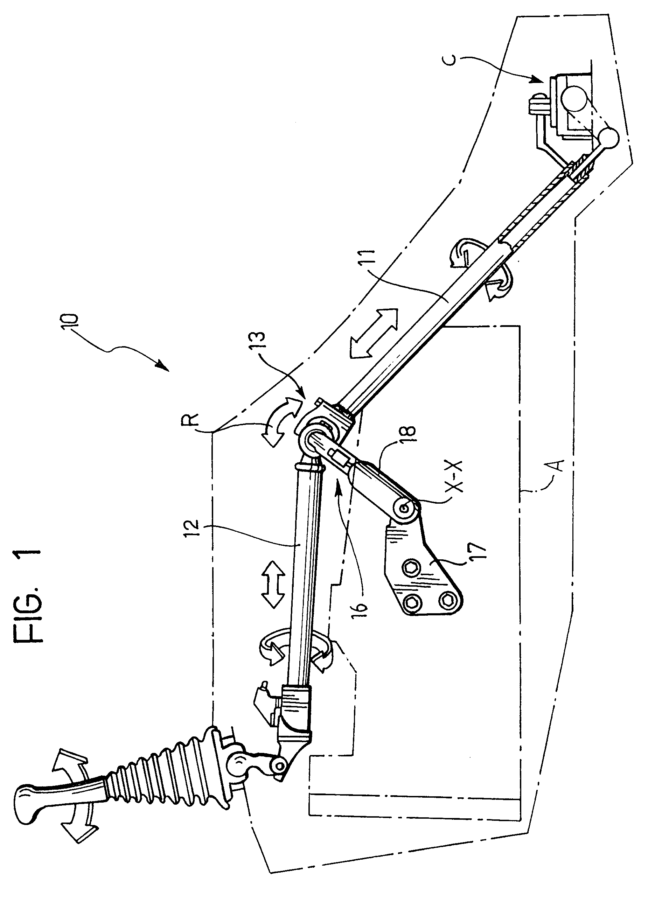

The joint 13 between the transmission levers 11 and 12 is formed in correspondence with a connecting rod 16 interposed between a mounting 17 fixed to the structure A of the vehicle, in this case, the engine block, and the articulation joint between the transmission levers. When the gears are engaged/disengaged, therefore, the connecting rod 16 pivots about the horizontal axis X-X of the connecting rod, its pivoting movement being indicated by the arrow R in Figure 1. With reference to Figures 1-3, an elongate plate-like arm 18 is also fixed to the mounting 17 and has a first end 18a keyed rigidly to the mounting 17 in correspondence with the lower end of the connecting rod 16 (with reference to the installed configuration of the linkage) and a second end 18b with a substantially V-shaped cam profile 19 defining a central portion 19a and two side portions 19b. The average radial distance of the central portion 19a of the cam 19 from the axis of rotation X-X of the connecting rod 16 is greater than the average distance therefrom of the adjacent portions 19b connected thereto.

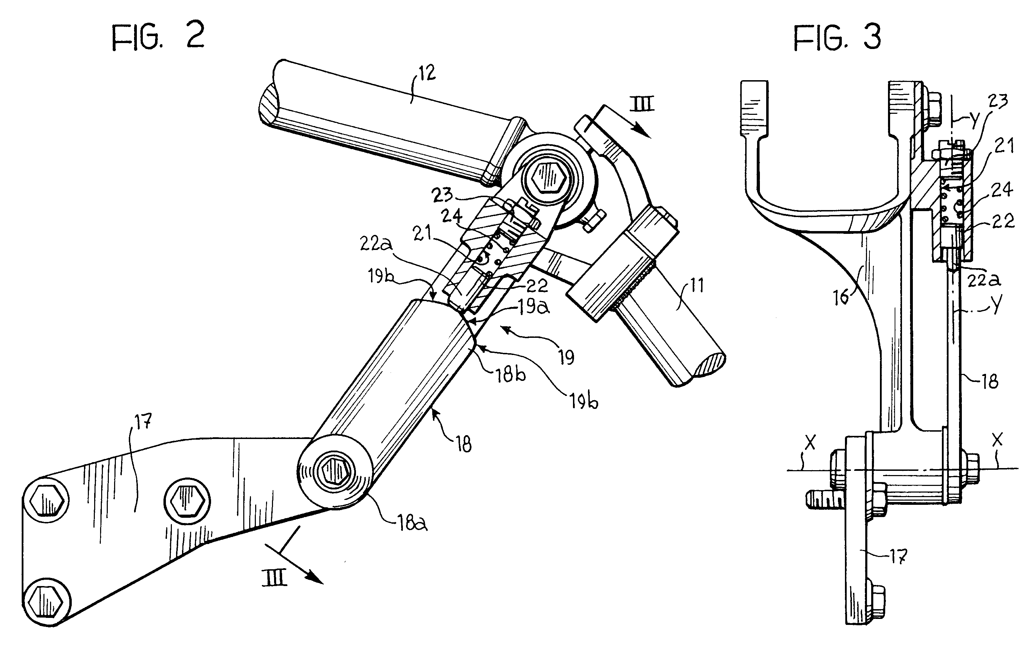

At its end which is articulated to the joint 13, the connecting rod 16 has a tubular seat 21 which has an axis Y-Y substantially parallel to the connecting rod itself and in which is slidable a push rod 22 with a sperhical end 22a in frontal contact with the cam profile 19 at the end 18b of the arm 18. A helical spring 24 is interposed between the push rod 22 and a screw adjustment device 23 for urging the end 22a of the push rod 22 against the cam 19 with a predetermined force. In the configuration of Figures 1-3, the gearbox is in neutral, which is the condition of maximum compression of the spring 24 by the cam profile 19. Clearly, when a gear is engaged, the connecting rod 16 pivots clockwise or anticlockwise (with reference to Figures 1 and 2) so that the push rod 22a slides over the cam profile 19 towards the portion 19b of that profile and progressively "unloads" the spring 24. The force required for the push rod 22 to compress the spring 24 again by sliding along on the cam profile 19 prevents any accidental disengagement of the gears.

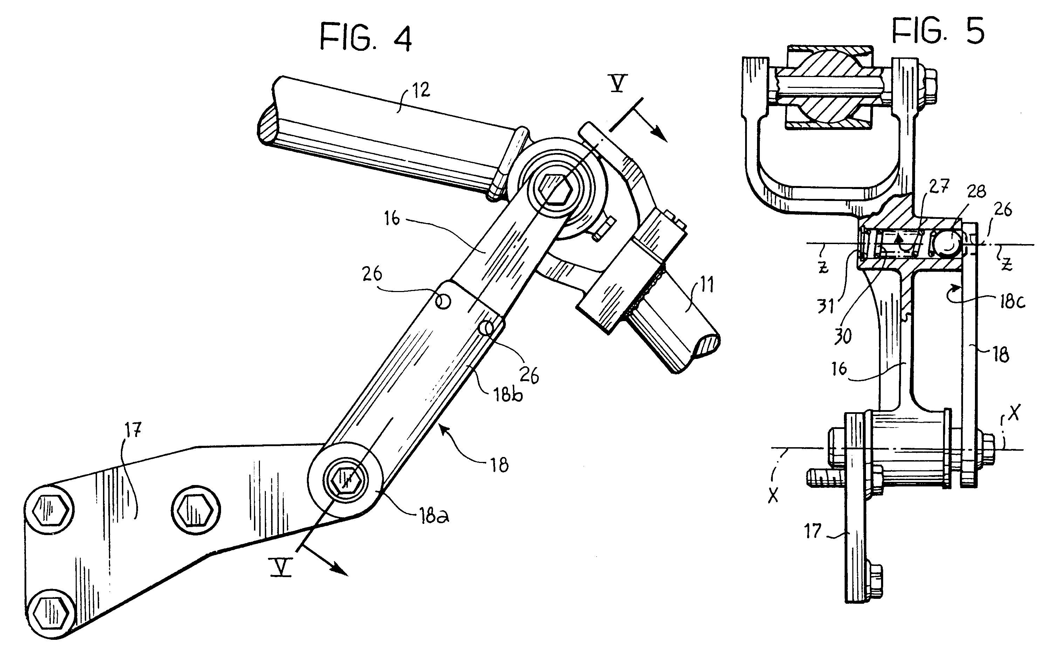

In the variant shown in Figures 4 and 5, in which similar elements have been indicated by the same reference numerals, instead of the cam profile 19, the arm 18 has two holes 26 with axes parallel to the axis of articulation X-X of the connecting rod 16, arranged at equal radial distances from that axis and interconnected by inclined planes perpendicular to the connecting rod 16. Adjacent the joint 13 between the transmission levers 11 and 12, the connecting rod 16 has a tubular seat 27 which has an axis Z-Z parallel to the axis of articulation X-X of the connecting rod 16 and in which a metal ball 28 can slide. The ball is urged towards a face 18c of the arm 18 by a helical spring 30 which is housed in the tubular seat 27 and reacts against a resilient split ring 31 provided at one end of the tubular seat 27.

In the configuration shown in Figures 4 and 5, which corresponds to the condition in which the gears are not engaged, the ball 28 is in contact with the face 18c of the arm 18. When the gears are engaged, the ball is resiliently snap-engaged in the holes 26 under the action of the spring 30 resiliently to lock the connecting rod 16 and thus prevent the accidental disengagement of the gear in a similar manner to that described above.

## Claims

1. An operating linkage for a gearbox of a commercial vehicle, including at least one pair of transmission levers (11, 12) interconnected with the interposition of a joint (13) and articulated to the structure of the vehicle by means of a connecting rod, including resilient engagement means (22, 24 or 28, 30) supported by the connecting rod (16) and adapted to cooperate with abutment means (18, 19, 26) fixed to the structure (A) of the vehicle in order to prevent an accidental disengagement of the gears; characterised in that said connecting rod is articulated at one end to the structure of the vehicle and at the other end to said joint (13) connecting said two transmission levers (11, 12), and in that a cam element (19) or a detent in the form of two recesses (26) is provided on said abutment means to cooperate with said resilient engagement means.

2. A linkage according to Claim 1, wherein a push rod (22, 22a) is supported slidably by the connecting rod (16) and parallel thereto, said cam element (18, 19) has a profiled edge (19) parallel to the plane of articulation of the connecting rod (16), said edge (19) has a first portion (19a) whose average radial distance from the pivot axis (X-X) of the connecting rod (16) is greater than the average radial distance therefrom of two second portions (19b) of said edge (19) adjacent and connected to the first portion (19a), and a spring (24) is interposed between said push rod (22) and said connecting rod (21, 16) to urge the push rod (22, 22a) against said edge (19), whereby pivoting of said connecting rod (16) compresses said spring (24) when said push rod (22) slides from one of the two second portions (19b) of the edge (19) towards the first portion (19a).

3. A linkage according to Claim 1, wherein a slider (28) is slidable supported by and substantially parallel to the pivot axis (X-X) of said connecting rod (16); said two recesses (26) are provided at equal radial distances from the pivot axis (X-X) of the connecting rod (16) and interconnected by inclined planes on a plate-like element (18) being said abutment means which is perpendicular to the pivot axis (X-X) of said connecting rod (16); and a spring (30) is interposed between said slider (28) and said connecting rod to urge the slider (28) towards said plate-like element (18), whereby pivoting of said connecting rod (16) due to the engagement of the gears causes the resilient snap-engagement of the slider (28) with one of said recesses (26).

4. A linkage according to Claim 2, wherein said cam element is constituted by an elongate metal plate (18) substantially parallel to said connecting rod (16) and having a first end (18a) which is fixed to said support structure (17, A) in correspondence with the pivot axis (X-X) of said connecting rod (16) and a second convex end (18b) which is substantially V-shaped with a flattened vertex and defines said profiled edge (19).

5. A linkage according to Claim 3, wherein said slider is constituted by a metal ball (28) slidable in a tubular seat (27) of the connecting rod (16), and wherein said recesses are defined by two holes (26) with axes (Z-Z) substantially parallel to the pivot axis (X-X) of said connecting rod (16).

## Patentansprüche

1. Schaltgestänge für ein Schaltgetriebe eines Nutzfahrzeugs, mit wenigstens einem Paar Übertragungshebel (11, 12), die unter Dazwischensetzung eines Gelenkes (13) miteinander verbunden und am Aufbau des Fahrzeugs mit Hilfe einer Verbindungsstange angelenkt sind, und mit elastischen Druckmitteln (22, 24 oder 28, 30), die an der Verbindungsstange (16) gehalten und so ausgebildet sind, daß sie mit einer am Aufbau (A) des Fahrzeugs befestigten Anlageeinrichtung (18, 19, 26) zusammenwirken, um ein unbeabsichtigtes Herausspringen der Gänge zu verhindern; dadurch gekennzeichnet, daß die Verbindungsstange mit einem Ende am Aufbau des Fahrzeugs und mit dem anderen Ende an dem die zwei Übertragungshebel (11, 12) verbindenden Gelenk (13) angelenkt ist, und daß ein Nockenelement (19) oder eine Arretierung in Form zweier Vertiefungen (26) an der Anlageeinrichtung zum Zusammenwirken mit den elastischen Druckmitteln vorgesehen ist.

2. Gestänge nach Anspruch 1, in welchem eine Druckstange (22, 22a) verschiebbar an der Verbindungsstange (16) gehalten und parallel dazu angeordnet ist, das Nockenelement (18, 19) eine profilierte Kante (19) parallel zur Schwenkebene der Verbindungsstange (16) umfaßt, wobei die Kante (19) einen ersten Abschnitt (19a) aufweist, dessen durchschnittlicher radialer Abstand von der Schwenkachse (X-X) der Verbindungsstange (16) größer ist als deren durchschnittlicher radialer Abstand von zwei zweiten, an den ersten Abschnitt (19a) angrenzenden und mit diesem verbundenen Abschnitten (19b) der Kante (19), und eine Feder (24) zwischen der Druckstange (22) und der Verbindungsstange (21, 16) zwecks Beaufschlagung der Druckstange (22, 22a) gegen die Kante (19) angeordnet ist, wobei eine Schwenkbewegung der Verbindungsstange (16) die Feder (24) komprimiert, wenn die Druckstange (22) von einem der zwei zweiten Abschnitte (19b) der Kante (19) in Richtung des ersten Abschnitts (19a) gleitet.

3. Gestänge nach Anspruch 1, in welchem ein Gleitstuck (28) verschiebbar an der Verbindungsstange (16) gehalten und im wesentlichen parallel zu deren Schwenkachse (X-X) angeordnet ist; die zwei Vertiefungen (26) mit gleichen radialen Abständen von der Schwenkachse (X-X) der Verbindungsstange (16) vorgesehen und durch schräge Ebenen an einem die Anlageeinrichtung darstellenden plattenförmigen Element (18) miteinander verbunden sind, das senkrecht zur Schwenkachse (X-X) der Verbindungsstange (16) angeordnet ist; und eine Feder (30) zwischen dem Gleitstück (28) und der Verbindungsstange (16) zwecks Beaufschlagung des Gleitstücks (28) in Richtung des plattenförmigen Elementes (18) angeordnet ist, wobei eine Schwenkbewegung der Verbindungsstange (16) den elastischen Schnapp-Eingriff des Gleitstücks (28) in eine der Vertiefungen (26) aufgrund der eingelegten Gänge hervorruft.

4. Gestänge nach Anspruch 2, in welchem das Nockenelement durch eine langgestreckte Metallplatte (18) gebildet ist, die im wesentlichen parallel zur Verbindungsstange (16) verläuft und ein erstes Ende (18a), das in Übereinstimmung mit der Schwenkachse (X-X) der Verbindungsstange (16) am Stütz-Aufbau (17, A) befestigt ist, und ein zweites, konvexes Ende (18b) aufweist, das mit einem abgeflachten Scheitel im wesentlichen V-förmig ausgebildet ist und die profilierte Kante (19) bildet.

5. Gestänge nach Anspruch 3, in welchem das Gleitstück durch eine in einem rohrförmigen Sitz (27) der Verbindungsstange (16) verschiebbare Metallkugel (28) gebildet ist, und in welchem die Vertiefungen durch zwei Locher (26) gebildet sind, die Achsen (Z-Z) aufweisen, die im wesentlichen parallel zur Schwenkachse (X-X) der Verbindungsstange (16) sind.

## Revendications

1. Une tringlerie de commande d'une boîte de vitesse pour véhicule utilitaire, comprenant au moins une paire de leviers de transmission (11, 12), interconnectés avec interposition d'un accouplement (13) et articulés à la structure du véhicule au moyen d'une tige de liaison comprenant un moyen d'engagement élastique (22, 24 ou 28, 30), supporté par la tige de liaison (16) et adapté pour coopérer avec des moyens de butée (18, 19, 26) fixés à la structure (A) du véhicule, de manière à empêcher tout désengagement accidentel des vitesses engagées ; caractérisée en ce que ladite tige de liaison est articulée, à une extrémité, à la structure du véhicule et, à l'autre extrémité, audit accouplement (13) reliant lesdits deux leviers de transmission (11, 12), et en ce qu'un élément formant came (19) ou un positionneur à détente se présentant sous forme de deux cavités (26) est prévu sur lesdits moyens de butée, de manière à coopérer avec ledit moyen d'engagement élastique.

2. Une tringlerie selon la revendication 1, dans laquelle une tige de poussée (22, 22a) est supportée à coulissement par la tige de liaison (16) et lui est parallèle, ledit élément formant came (18, 19) ayant un bord profilé (19) parallèle au plan d'articulation de la tige de liaison (16), ledit bord (19) ayant une première partie (19a) dont la distance radiale moyenne à l'axe de pivotement (X-X) de la tige de liaison (16) est supérieure à la distance radiale moyenne à ce même axe de deux deuxièmes parties (19b) dudit bord (19) adjacentes et reliées à la première partie (19a), et un ressort (24) étant interposé entre ladite tige de poussée (22) et ladite tige de liaison (21, 16), de manière à pousser la tige de poussée (22, 22a) contre ledit bord (19), de façon que le pivotement de ladite tige de liaison (16) produise la compression dudit ressort (24) lorsque ladite tige de poussée (22) coulisse de l'une des deux deuxièmes parties (19b) du bord (19) en direction de la première partie (19a).

3. Une tringlerie selon la revendication 1, dans laquelle un curseur (28) est susceptible de coulisser sensiblement parallèlement à l'axe de pivotement (X-X) de ladite tige de liaison (16) qui le supporte; lesdites deux cavités (26) étant situées à égale distance radiale de l'axe de pivotement (X-X) de la tige de liaison (16) et interconnectées par des plans inclinés d'un élément en plaque (18) constituant ledit moyen de butée orienté perpendiculairement à l'axe de pivotement (X-X) de ladite tige de liaison (16); et un ressort (30) étant interposé entre ledit curseur (28) et ladite tige de liaison, de manière à pousser le curseur (28) vers ledit élément formant plaque (18), de façon que le pivotement de ladite tige de liaison (16) produit par l'engrènement des rapports de vitesse provoque l'engagement à déclic du curseur (28) avec l'une desdites cavités (26).

4. Une tringlerie selon la revendication 2, dans laquelle ledit élément formant came est constitué par une plaque métallique (18) allongée, sensiblement parallèle à ladite tige de liaison (16) et ayant une première extrémité (18a) fixée à ladite structure de support (17,A), en correspondance avec l'axe de pivotement (X-X) de ladite tige de liaison (16) et une deuxième extrémité (18b) convexe, sensiblement en forme de V, dont le sommet est aplati et définit ledit bord profilé (19).

5. Une tringlerie selon la revendication 3, dans laquelle ledit curseur est constitué par une bille métallique (28), susceptible de coulisser dans un siège tubulaire (27) de la tige de liaison (16), et dans laquelle lesdites cavités sont définies par deux trous (26) dont les axes (Z-Z) sont sensiblement parallèles à l'axe de pivotement (X-X) de ladite tige de liaison (16).
